# EUROPÄISCHE PATENTSCHRIFT

(11) **EP 4 127 654 B1**
(45) Veröffentlichungstag und Bekanntmachung des Hinweises auf die Patenterteilung: **17.06.2026**
(21) Anmeldenummer: 21713871.8
(22) Anmeldetag: 24.03.2021
(51) Int. Cl.: G01N 15/02, G01N 1/22, G01N 1/40

(54) **VORRICHTUNG ZUM BESTIMMEN VON PARTIKELN EINES AEROSOLS**
DEVICE FOR ANALYSING PARTICLES OF AN AEROSOL
DEVICE FOR ANALYSING PARTICLES OF AN AEROSOL

(30) Priorität: 01.04.2020 DE 102020002041
(43) Veröffentlichungstag der Anmeldung: 08.02.2023
(73) Patentinhaber: Palas GmbH Partikel-und Lasermesstechnik, 76229 Karlsruhe (DE)
(72) Erfinder: WEIS, Frederik, 76863 Herxheim Rheinland-Pfalz (DE); WEISS, Maximilian, 76356 Weingarten Baden-Württemberg (DE)
(74) Vertreter: Lichti - Patentanwälte Partnerschaft mbB
(86) Internationale Anmeldenummer: PCT/EP2021/057544
(87) Internationale Veröffentlichungsnummer: WO 2021/197957

(56) Entgegenhaltungen:
- WO-A1-99/41588
- DE-A1- 102009 000 904
- US-A1- 2014 122 021

## Beschreibung

Die Erfindung betrifft eine Vorrichtung zum Bestimmen von durch ein Messvolumen strömenden Partikeln eines Aerosols.

Es gibt zunächst einfache optische Messgeräte zur Feinstaubmessung, die den in der Luft befindlichen Feinstaub pauschal quasi in einem Kanal erfassen und den Messwert in Form eines Spannungswerts an einer Anzeige anzeigen.

Darüber hinaus gibt es aufwendig ausgestaltete und arbeitende Aerosolspektrometer, bei denen einzelne Partikel aufgrund eines durch Lichtstreuung an diesen generierten Signals gezählt und hinsichtlich der Stärke des Streusignals in einer Vielzahl von einzelnen Kanälen, bis zu 256 Kanälen, erfasst werden. Die Stärke des Streulicht-Signals gilt dabei als Maß für die Größe des Partikels, so dass derart die Partikel grundsätzlich hinsichtlich ihrer Größe erfasst und bewertet werden können.

Allerdings kann mit einem derartigen Aerosolspektrometer aufgrund des empfangenen Lichtsignals nur die optische Größe bzw. der optische Durchmesser der Partikel des Aerosols erfasst werden. Dieser kann aber bei Partikeln mit unterschiedlichem Brechungsindex, Formfaktor (rund/eckig), Dichte durchaus gleich sein, mit anderen Worten: tatsächlich unterschiedlich große Partikel können ein gleiches Streulichtsignal bewirken oder aber in Abhängigkeit von den genannten Einflussgrößen können Partikel gleicher aerodynamischer Größe (Durchmesser) unterschiedliche Streulichtsignale bewirken.

Die US 2014/0122021 A1 zeigt ein Verfahren und eine Vorrichtung zum Bestimmen der Abscheideeffizienz eines Zyklonabscheiders mit Sammeln von Feststoffpartikeln, die durch den Zyklonabscheider abgeschieden wurden, Analysieren der Partikelgröße für die gesammelten Partikel, Berechnen von Merkmalsgrößen der Teilchen und Bestimmen der Abscheideleistung des Zyklonabscheiders.

Die DE 10 2009 000 904 A1 betrifft ein Verfahren und Systeme zum Berechnen der Größenverteilung von kleinen Partikeln. Sie sieht hierzu die Bereitstellung einer Referenzmatrix von vorausberechneten Referenzvektoren vor, wobei jeder Referenzvektor eine diskrete Partikelgröße oder einen Partikelgrößenbereich einer Partikelgrößenverteilung in einem verdünnten Kolloid enthaltener Partikel repräsentiert.

Die WO 99/41588 A1 zeigt eine Vorrichtung zur Partikelmessung mit Einlassrohr zur Sensoreinheit und davorgestelltem zentrifugalem Separator.

Hiervon ausgehend liegt der Erfindung die Aufgabe zugrunde, ein Verfahren und eine Vorrichtung der eingangs genannten Art dahingehend weiterzubilden, dass sie eine verbesserte Bestimmung der Feinstaubfraktionen bei optischer Messung ermöglichen.

Erfindungsgemäß wird die genannte Aufgabe durch eine Vorrichtung mit den Merkmalen des Anspruchs 1 gelöst.

Die erfindungsgemäße Vorrichtung ermöglicht die Abscheidegrade von Partikeln eines Aerosols bei stillstehendem Abscheideventilator und in Abhängigkeit der Drehzahl des Abscheideventilators zu bestimmen und dies gegebenenfalls bei einem Spektrometer mit mehreren Kanälen hinsichtlich der einzelnen Partikelfraktionen entsprechend der Größen der Partikel. Mit Norm-Aerosolen vorgegebener Partikel kann vorab eine Kalibrierung vorgenommen werden.

Durch die erfindungsgemäße Vorrichtung wird im Ergebnis eine verbesserte Bestimmung der Feinstaubpartikel, insbesondere der Feinstaubfraktionen, erreicht, also der kleinere Partikel in einem Aerosol mit auch größeren Partikeln, die bei eingeschaltetem Ventilator in Abhängigkeit von dessen Förderleistung mehr oder minder, teilweise vollständig, abgeschieden werden. Es werden damit die eingangs genannten bisherigen Probleme überwunden. Es kann damit bei einer spektrometischen Messung der optischen Partikeldurchmesser durch Bestimmung der Partikelzahlen der einzelnen Fraktionen bei verschiedenen Separierkräften des Separators auf die aerodynamischen Durchmesser der Partikel der Fraktionen geschlossen werden.

Der Sensoreinheit ist in einem Nebenzweig ein Separator zum größen- und massensensitiven Abtrennen von Partikeln vorgeschaltet. Bevorzugt ist der Separator in einem Nebenzweig zu einem Haupteinlass zur Sensoreinheit angeordnet.

In einer bevorzugten Weiterbildung der erfindungsgemäßen Vorrichtung ist vorgesehen, dass der Separator als Fliehkraft-Separator wirkt und leichte und schwere Partikel durch Fliehkraft separiert.

Erfindungsgemäß ist das Zuführrohr von einem Ringkanal umgeben, der einen Einlass von einem Ventilator am unteren Ende des Separators und einen Einlass zum Zuführrohr zur Sensoreinheit am oberen Ende aufweist. Alternativ oder zusätzlich kann vorgesehen sein, dass durch einen Ringkanal an dessen unterem Ende sich ein Einlass zum Ventilator und an dessen oberen Ende sich ein Einlass eines Zuführrohrs zur Sensoreinheit befindet, wobei insbesondere der Ringkanal über seinen Einlass ein schraubenförmig über maximal eine Windung schraubenförmiges aufliegendes Leitblech aufweist.

Ein Verfahren, das nicht Teil der Erfindung ist, zeichnet sich dadurch aus, dass die Partikel einem Aerosolspektrometer mit vorzugsweise einer Kanalzahl von bis zu 256 zugeführt werden.

Aerodynamische Durchmesser der Partikel des Aerosols können insbesondere als Funktion der Drehzahl des Fliehkraft-Separators und damit der diesen beaufschlagenden elektrischen Spannung bestimmt werden d=f(dₒ, D) bzw. d=f(dₒ, U), wobei d der aerodynamische Partikeldurchmesser, dₒ ein gemessener optischer Partikeldurchmesser, D die Drehzahl des Fliehkraft-Separators und U die diesen beaufschlagende elektrische Spannung ist.

Ein Verfahren, das nicht Teil der Erfindung ist, sieht vor, dass Partikel des Aerosols durch Fliehkraft des Ventilators nach Größen selektiert werden und/oder dass Partikel des Aerosols durch Fliehkraft des Ventilators in einer aufsteigenden Ringströmung des Aerosols nach Größe selektiert werden.

Darüber hinaus sieht eine Weiterbildung eines Verfahrens, das nicht Teil der Erfindung ist vor, dass der Fraktionsabscheidegrad FAGᵢ=cₙ (dₚ),Li/cₙ(dₚ),L₀ einzelner Größenfraktionen der Partikel des Aerosols bestimmt wird, wobei cₙ(dₚ),Lᵢ die Konzentration der Fraktion n=1...N, N=1...256 beim Messschritt i mit einer vorgegebenen Drehzahl eingeschaltetem und cₙ(dₚ),L₀ die Konzentration der Fraktion n beim ersten Schritt 0 bei ausgeschaltetem und damit ruhendem Fliehkraft-Separator ist.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1: Eine schematische Schnittdarstellung einer ersten Ausführungsform der erfindungsgemäßen Vorrichtung;
- Fig. 2: eine detailierte Darstellung der Messeinheit der Fig. 1;
- Fig. 3: eine weitere Ausführungsform der erfindungsgemäßen Vorrichtung;
- Fig. 4: eine Darstellung der Größenverteilung der im Partikelzähler der erfindungsgemäßen Vorrichtung gemessenen Teilchen in Abhängigkeit ihres Durchmessers bei ruhendem Separator;
- Fig. 5: eine Darstellung des Fraktionsabscheidegrads einer erfindungsgemäßen Vorrichtung in **Ab**hängigkeit von der Drehzahl; und
- Fig. 6: eine Darstellung des Signalverlaufs des Partikelzählers für kleine Teilchen bzw. große Teilchen über die Zeit mit Ein- und Abschaltung des Separators.

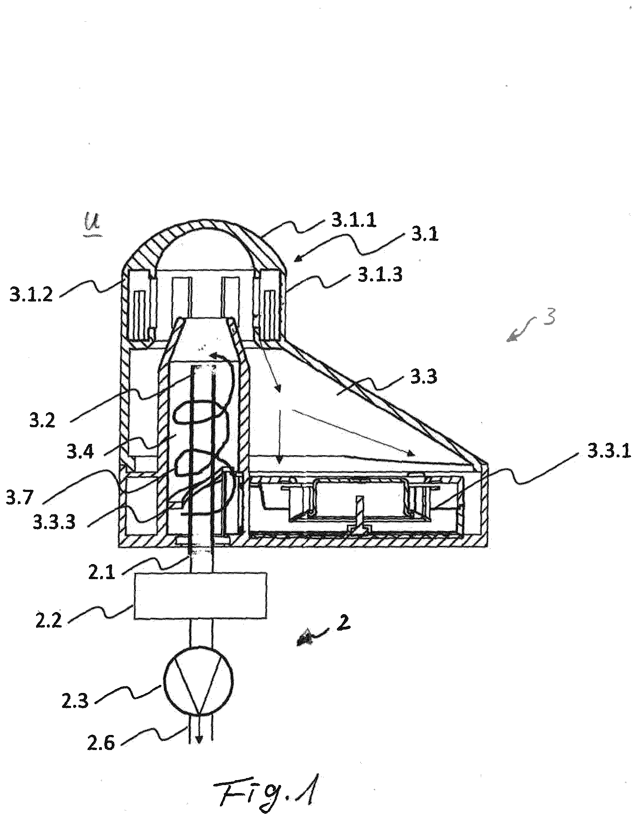

Eine erfindungsgemäße Vorrichtung 1 der Fig. 1 weist eine Sensoreinheit 2 mit Partikelmessgerät und dieser vorgeordnet einen Separator 3 auf.

Der Separator 3 weist einen Einlass in Form eines Einlasskopfes 3.1 auf, der unter einer geschlossenen Haube 3.11 eine ringförmige Doppelwandung 3.1.2 aufweist, durch die - unbekannte - Aerosole aus der Umgebung U in die Vorrichtung einströmen kann, die einen Einlass 3.2.1 eines zum Strömungsrohr 2.1 führenden Zuführrohrs umgibt. Innerer Ring und äußerer Ring der Doppelwandung 3.1.2 weisen jeweils in Umfangsrichtung versetzte Durchbrüche 3.1.3 auf, wodurch die einströmende Partikelströmung vergleichmäßigt wird.

Unterhalb des Einlasskopfes 3.1 ist ein äußeres Rohr 3.1.4 angeordnet, in dem ein Zuführrohr 3.2 zum Strömungsrohr 2.1 der Sensoreinheit 2 angeordnet ist. Zwischen Rohr 3.1.4 und Strömungsrohr 2.1 ist ein Ringkanal 3.4 ausgebildet.

Seitlich des Rohrs 3.1.4 ist eine Zuführkammer 3.3 mit ebenfalls einem Einlass vom Einlasskopf 3.1 angeordnet, in deren unteren Bereich sich ein Ventilator 3.3.1, hier mit horizontaler Drehachse, befindet. Der Ringkanal 3.4 bildet einen Rückkanal und Separierkanal vom Ventilator 3.3.1 zum Einlass des Zuführrohrs 3.2. Unmittelbar unter dem Einlass des Ringkanals 3.4 vom Ventilator 3.3.1 ist ein Ringkanal, ein schraubenförmiges aufliegendes Leitblech angeordnet, von dem sich das Zuführrohr 3.2 höchstens um eine Windung erstreckt.

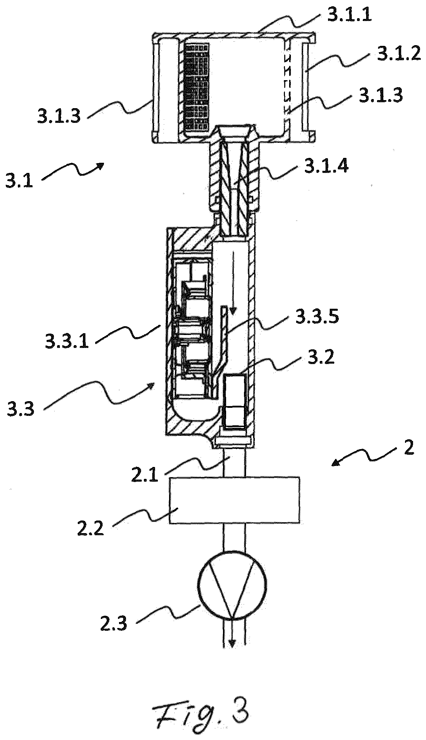

Die Sensoreinheit 2 kann in üblicher Weise ausgebildet sein, beispielsweise gemäß der DE 3641716 A1 (Fig. 3) oder auch der EP 2 717 035 B1.

Die Sensoreinheit 2 weist im Wesentlichen ein Strömungsrohr 2.1 mit einem Partikelmessgerät 2.2 auf, dem ein Gasförderer 2.3 zum Hindurchsaugen ein Partikel enthaltendes Aerosol durch das Strömungsrohr 2.1 und dem Partikelmessgerät 2.2 nachgeordnet ist. Ein Gasförderer ist eine Fördereinrichtung zum Fördern eines Mediums, dessen Trägerfluid Gas ist. Unter ein derartiges Medium fällt auch ein Aerosol. Konkret kann der Gasförderer als Ventilator oder Pumpe ausgebildet sein.

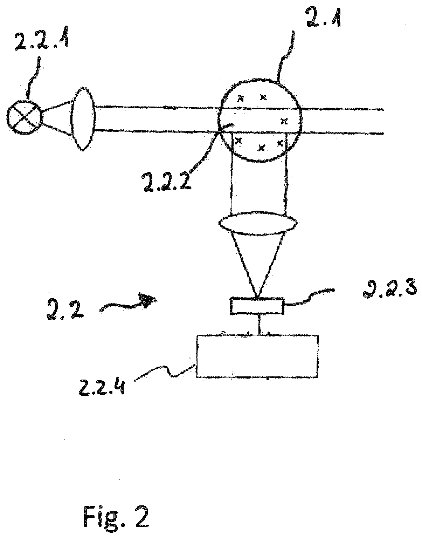

Das Partikelmessgerät 2.2 - Fig. 2 - hat in bekannter Weise eine Beleuchtungseinheit 2.2.1, mit der die durch das Strömungsrohr 2.1 strömenden Partikeln in einer durch den Lichtstrahl der Beleuchtungseinheit im Strömungsrohr 2.1 gebildeten - virtuellen - Messzelle 2.2.2 beleuchtet werden. Darüber hinaus weist das Partikelmessgerät 2.2 einen Sensor oder Detektor 2.2.3 auf, mittels dessen von den durch das Strömungsrohr 2.1 strömenden Partikeln des Aerosols gestreutes Streulicht erfasst wird und, insbesondere bei Ausgestaltung des Messgeräts als Partikelzähler oder Spektrometer Lichtsignale der erfassten Teilchen gezählt werden bzw. spektroskopisch in einzelnen den Teilchengrößen entsprechenden Kanälen erfasst werden. Der Lichtquelle kann eine Sammellinse nachgeordnet sein, um einen Parallelstrahl zu erzeugen, der dem Deflektor 2.2.3 ist eine Sammellinse vorgeordnet um das gestreute Licht auf dem Deflektor 2.2.3 zu fokussieren. Dem Detektor ist eine Zähl- oder Auswerteinheiteinheit 2.2.4 zugeordnet, mittels derer die vom Detektor detektierten Teilchen größenselektiv in beispielsweise bis zu 256 Kanälen entsprechend ihrer durch die Intensität des durch sie gestreuten Lichts gegebener (optischer) Größe gezählt werden und damit eine Größenverteilung der Teilchen gemessen und ausgegeben werden kann (Fig. 3).

Bei der Messung ist die Lichtintensität des Streulichts und damit auch die hierdurch bedingte elektrische Signalstärke ein Maß für die Partikelgröße der Aerosol-Partikel, der dementsprechend ein Partikeldurchmesser zugeordnet wird. Die gemessene Partikelgrößenverteilung ist eine Funktion vom Partikeldurchmesser.

Wenn der Ventilator 3.3.1 ausgeschaltet ist und damit ruht, wird ausschließlich mittels des Gasförderers 2.3 in Form einer Absaugpumpe der Sensoreinheit 2 das gesamte Aerosol mit seinen sämtlichen Partikelgrößenfraktionen über den Einlass 3.2.1 durch das Zuführrohr 3.2, das Strömungsrohr 2.1, die Messeinheit 2.2, der Gasförderer 2.3 zu einem Auslass 2.6 der Sensoreinheit 2 und damit durch die - virtuelle - Messzelle in der Messeinheit 2.2 gesaugt. Derart strömen durch die Messzelle sämtliche streuenden Partikelfranktionen des Aerosols und werden durch die Auswerteeinheit erfasst.

Ist der Separator 3 durch Anschalten des Ventilators 3.3.1 eingeschaltet, wird Aerosol von letzterem durch die Zuführkammer 3.3 angesaugt und durch den Rückkanal gedrückt. Die Partikel werden durch den Ventilator 3.3.1 zunächst Flieh- oder Radialkräften und damit Radialbeschleunigungen ausgesetzt, die für größere Partikel größer als für kleinere Partikel sind. Hierdurch wird bewirkt, dass größere Partikel abgeschieden werden und nur kleinere Partikel in den unteren Teil des Ringkanals 3.4 eintreten und von dem Gasförderer 2.3 durch den - oberen - Einlass des Zuführrohrs 3.2, das Strömungsrohr 2.1 und damit die Messeinheit 2.2 hindurchgesaugt werden und damit zur Signalbildung in der Messzelle beitragen.

Der angesaugte Aerosolstrom wird so durch den Ventilator 3.3.1 tangential mittels eines Leitbleches 3.3.3 in den einen Separierkanal bildenden Ringspalt 3.4 zwischen Zuführrohr 3.2 und diesen umgebender Wandung geführt und eine Drallströmung erzeugt. Am oberen Ende erfolgt die Absaugung zum Partikelzähler/Aerosolspektrometer. So wird das vom Ringkanal 3.2 zum Ventilator 3.3.1 zugeführte Aerosol und von dem Gasförderer 2.3 angesaugte (Rest-)Aerosol in eine schraubenförmige Aufwärtsströmung versetzt, die durch das genannte Leitblech unterstützt wird. Hierdurch werden weitere grobe Partikelfraktionen sich absetzen können und nur kleinste Partikel aufsteigen, durch den oberen Einlass des Zuführrohrs 3.2 in dieses eintreten und schließlich durch die Sensoreinheit 2 geführt und nur solche kleine Partikel durch die Auswerteeinheit erfasst und ausgewertet werden.

Bei eingeschaltetem Ventilator 3.3.1 von oben direkt in das Zuführrohr eingehendes Aerosol wird ein Leitblech 3.3.3 im unteren Bereich des Zuführrohrs 3.2 vom Ventilator 3.3.1 über den Ringkanal 3.4 wieder zum Eintritt in die Zuführkammer 3.3 gesaugt. Hierdurch wird erreicht, dass bei eingeschaltetem Ventilator praktisch das gesamte Aerosol durch diesen geführt wird und dessen Separierwirkung unterliegt, so dass große und grobe Partikel sich absetzen und kleine Partikelfraktionen im Aerosol weitergeführt werden. So kann die Separation sowohl unmittelbar durch den Ventilator als auch im Ringkanal stattfinden. Der jeweilige Anteil ist abhängig vom jeweiligen Aerosol und der Drehzahl. Die Hauptseparation erfolgt jedoch unmittelbar beim Ventilator. Der Separierkanal bildet ein zusätzliches Element, welches die Separationseffizienz weiter verbessert. Der Ringkanal wirkt damit als Schwerkraftseparator.

Der aus dem Separator 3 über das Strömungsrohr 2.1 austretende Aerosolstrom wird von der Pumpe 2.3 durch die Messzelle 2.2.2 der Messeinheit 2.2 gesaugt und dort von der Beleuchtungseinheit 2.2.1 beleuchtet. Von jeweils einzelnen Partikeln des Aerosols gestreutes Licht trifft - über die Sammellinse - in den Sensor oder Detektor 2.2.3. Das entsprechende opti-elektronisch gewandelte detektierte Signal wird dann in der Auswerteeinheit 2.2.4 ausgewertet, insbesondere durch ein Spektrometer spektrometisch analysiert und zwar hinsichtlich der Partikelgröße, wozu beispielsweise 256 (Größen-)Kanäle zur Verfügung stehen können.

Die Fig. 3 zeigt eine andere Ausführungsform der erfindungsgemäßen Vorrichtung, bei der der Aufbau der Sensoreinheit 2 grundsätzlich der gleiche ist wie bei der Ausgestaltung der Fig. 1.

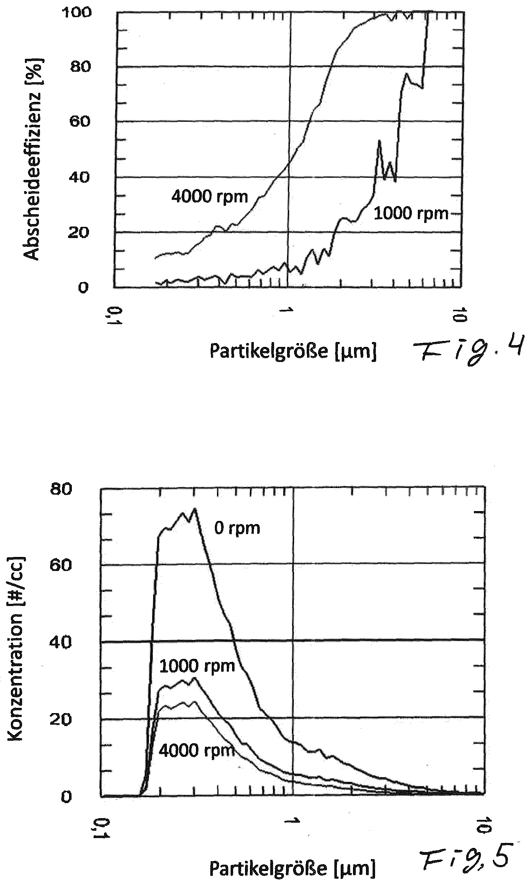

Während bei der Ausgestaltung der Fig. 1 der Ventilator mit vertikaler Achse ausgerichtet ist, weist der Ventilator 3.3.1 bei der Ausgestaltung der Fig. 3 und 5 eine horizontale Achse auf.

Die Sensoreinheit 2 kann bei der Ausgestaltung der Fig. 3 die gleiche sein wie bei den Fig. 1 und 2 und zu diesen Figuren beschrieben.

Ansonsten ist die Ausgestaltung der Vorrichtung 1 nach der Fig. 2 grundsätzlich die gleiche wie bei der Fig. 1, deswegen sind gleiche Teile mit gleichen Bezugszeichen versehen und auch auf vorhandene gleiche Merkmale auf die Darstellung der Fig. 1 verwiesen wird.

Zwischen Einlasskopf 3.1 und Zuführrohr 3.2 ist ein Düsenrohr 3.1.4 zwischengeschaltet, um die Aerosolströmung möglichst laminar zu formen. Die Zuführkammer 3.3. mit dem Ventilator 3.3.1 ist hier parallel zum Zuführrohr angeordnet, wobei in diesem ein bei Betrieb des Ventilators 3.3.1 wirksames Leitblech 3.3.3 vorgesehen ist.

Das Arbeitsprinzip ist wiederum grundsätzlich das gleiche: Ist der Ventilator 3.3.1 ausgeschaltet und ruht, so wird das Aerosol einzig durch den Gasförderer 2.3 über den Einlasskopf 3.1 in und durch das Zuführrohr 3.2, durch das Strömungsrohr 2.1 und die Messeinheit 2.2 gesaugt und über den Gasförderer 2.3 abgegeben. Das gesamte Aerosol mit den gesamten in ihm enthaltenen Partikeln, insbesondere Partikelfraktionen, tritt durch die Messzelle, so dass sämtliche Partikel der in der Umgebung befindlichen und in das Strömungsrohr 2.1 eintretenden Aerosols der Lichtquelle streuen und daher durch den Detektor erfasst werden können.

Ist der Ventilator dagegen eingeschaltet und dreht mit hoher Geschwindigkeit, so erfolgt die Strömung über den Nebenzweig. Das Aerosol wird durch den Ventilator 3.3.1 verwirbelt, größere Partikel erhalten eine größere Radialgeschwindigkeit und werden abgeschieden, bei der Ausgestaltung der Fig. 2 in der Mitte unterhalb des Ventilators, während lediglich kleinere Partikel von dem Gasförderer 2.3 in den Einlasskopf 3.1 eingesaugt werden und durch die Messzelle treten.

Vorstehendes ist aus den Fig. 3 bis 5 ersichtlich:
Die Fig. 3 zeigt die bei einer Vorrichtung 1 gemäß den Fig. 1, bzw. 2 gemessene Partikelverteilung cₙ, d.h. die Partikelkonzentration in Abhängigkeit von der Partikelgröße d und zwar bei der mit der oberen Kurve mit ausgeschaltetem bzw. ruhendem Separier-Ventilator. Hier zeigt sich, dass noch bei größeren Partikeln ein erhebliches Signal auftritt.

Ist der Ventilator demgegenüber eingeschaltet, so erfolgt ein größerer Abfall der Partikelgrößenverteilung mit größerem Partikeldurchmesser gemäß der mittleren Kurve bei einer Drehgeschwindigkeit des Ventilators von 1000 rpm, was zeigt, dass die Konzentration größerer Partikel wesentlich reduziert ist. Bei Erhöhung der Drehgeschwindigkeit des Ventilators auf 4000 rpm erfolgt eine weitere Reduzierung der Konzentration der größeren Partikel in der dargestellten unteren Kurve.

In der Fig. 5 ist die Separiereffizienz bzw. der Fraktionsabscheidegrad FAGᵢ = cₙ(dₚ),Lᵢ, in Abhängigkeit von der oberen Partikelgröße wiedergegeben.

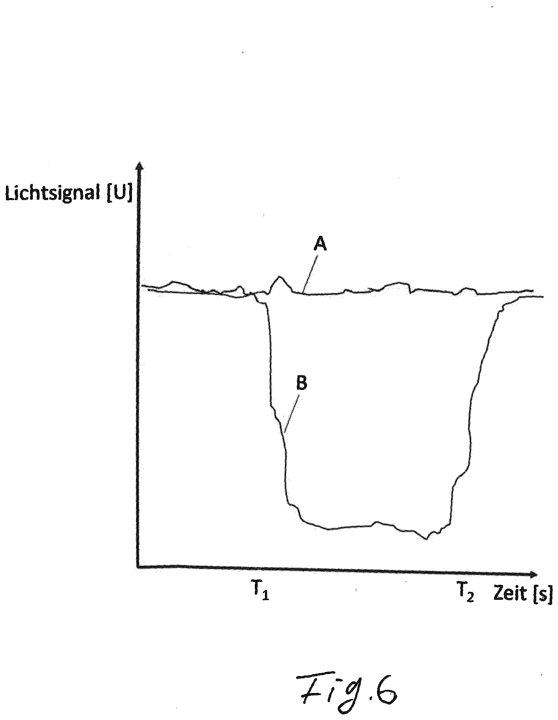

Die Fig. 6 wiederum zeigt ein Sensorlicht-Signal von an Partikeln gestreutem Streulicht in Abhängigkeit von der Zeit mit einer Kurve A für kleine Partikel und eine Kurve B für große Partikel. Dabei ist der Ventilator bis zur Zeit T1 abgeschaltet, wird bei T1 eingeschaltet und bei T2 wieder ausgeschaltet.

Es zeigt sich, dass bei eingeschaltetem Ventilator bei groben Partikeln das Messsignal B deutlich reduziert wird.

Die Messergebnisse bei aus- und eingeschaltetem Ventilator bzw. ruhendem Ventilator (Geschwindigkeit 0) und mit verschiedenen Geschwindigkeiten umlaufenden Ventilator bedingen aufgrund des aerodynamischen Separierverhaltens der Partikel des Aerosols, insbesondere aufgrund der Größe der Partikel, Masse und/oder Formfaktor eine Zusatzinformation gegenüber einer rein optischen Messung eines Partikelzählers ohne jegliche Beeinflussung des Aerosols bzw. des Separierverhaltens für Partikel unterschiedlicher Größe, also gegenüber bisheriger reiner optischer Messung. Während vorstehend die Verhältnisse qualitativ dargestellt sind, wird das Verhalten der Partikel in Abhängigkeit von der Ventilator-Geschwindigkeit empirisch anhand von Kalibrierfeinstäuben mit jeweils vorgegebener Größe und sonstiger Eigenschaften bestimmt, so dass aufgrund einer solchen Kalibrierung des Einflusses der Ventilator-Geschwindigkeit eine verbesserte Berechnung der Feinstaubfraktionen eines Aerosols gegeben ist.

## Patentansprüche

1. Vorrichtung zum Bestimmen von durch ein Messvolumen strömenden Partikeln eines Aerosols, mit einem Zuführrohr (3.2) zu einer das Messvolumen bildenden optischen Sensoreinheit (2) zur Erfassung von Partikeln, wobei der Sensoreinheit (2) in einem Nebenzweig ein Separator (3) zum größen- und/oder massensensitiven Abtrennen von Partikeln vorgeschaltet ist, der einen Einlass (3.1) zur Umgebung aufweist und wobei das Zuführrohr (3.2) von einem Ringkanal (3.4) umgeben ist, der einen Einlass von einem Ventilator (3.3.1) am unteren Ende des Separators (3) und einen Einlass zum Zuführrohr (3.2) zur Sensoreinheit (2) am oberen Ende aufweist.

2. Vorrichtung nach Anspruch 1, **dadurch gekennzeichnet, dass** der Separator (3) als Fliehkraft-Separator wirkt und leichte und schwere Partikel durch Fliehkraft separiert.

3. Vorrichtung nach Anspruch 1 oder 2, **dadurch gekennzeichnet, dass** der Ringkanal (3.4) über seinem Einlass ein über maximal eine Windung schraubenförmiges Leitblech aufweist.

4. Vorrichtung nach einem der Ansprüche 1 bis 3, **dadurch gekennzeichnet, dass** die Sensoreinheit (2) eine Messzelle (2.2.2) der Sensoreinheit (2) bestrahlende Lichtquelle (2.2.1), einen Streulichtdetektor (2.2.3) sowie eine elektronische Auswerteieinheit (2.2.4) aufweist.

5. Vorrichtung nach Anspruch 4, **dadurch gekennzeichnet, dass** Auswerteeinheit (2.2.4) ein Spektrometer, insbesondere zur Partikelgrößenbestimmung aufweist.

## Claims

1. A device for determining particles of an aerosol flowing through a measuring volume, which device has an optical sensor unit (2) forming the measuring volume for detecting particles, wherein a separator (3) for size-and/or mass-sensitive separation of particles is arranged in a secondary branch upstream of the sensor unit (2), having an inlet (3.1) to the surroundings and wherein the feed tube (3.2) is surrounded by an annular channel (3.4) which has an inlet of a fan (3.3.1) on the lower end of the separator (3) and an inlet to the feed tube (3.2) to the sensor unit (2) on the higher end.

2. The device according to claim 1, **characterized in that** the separator (3) acts as a centrifugal separator and separates light and heavy particles by means of centrifugal force.

3. The device according to any of claims 1 or 2, **characterized in that** the annular channel (3.4) has a helical overlying deflector plate over its inlet, which deflector plate is helical over a maximum of one turn.

4. The device according to any of claims 1 to 3, **characterized in that** the sensor unit (2) has a light source (2.2.1) irradiating a measuring cell (2.2.2) of the sensor unit (2), and has a scattered light detector (2.2.3) and an electronic evaluation unit (2.2.4).

5. The device according to claim 4, **characterized in that** the evaluation unit (2.2.4) has a spectrometer, in particular for particle size determination.

## Revendications

1. Dispositif permettant de déterminer des particules d'un aérosol s'écoulant à travers un volume de mesure, comportant un tube d'alimentation (3.2) vers une unité formant capteur optique (2) formant le volume de mesure pour la détection de particules, dans lequel un séparateur (3) pour la séparation sensible à la taille et/ou à la masse de particules est monté en amont de l'unité formant capteur (2) dans une branche secondaire, lequel séparateur présente une entrée (3.1) vers l'environnement, et dans lequel le tube d'alimentation (3.2) est entouré d'un canal annulaire (3.4) qui présente une entrée en provenance d'un ventilateur (3.3.1) au niveau de l'extrémité inférieure du séparateur (3) et une entrée vers le tube d'alimentation (3.2) vers l'unité formant capteur (2) au niveau de l'extrémité supérieure.

2. Dispositif selon la revendication 1, **caractérisé en ce que** le séparateur (3) agit comme un séparateur centrifuge et sépare les particules légères et lourdes par la force centrifuge.

3. Dispositif selon la revendication 1 ou 2, **caractérisé en ce que** le canal annulaire (3.4) présente au-dessus de son entrée une tôle de guidage hélicoïdale sur au maximum une spire.

4. Dispositif selon l'une des revendications 1 à 3, **caractérisé en ce que** l'unité formant capteur (2) présente une source lumineuse (2.2.1) irradiant une cellule de mesure (2.2.2) de l'unité formant capteur (2), un détecteur de lumière diffuse (2.2.3) ainsi qu'une unité d'évaluation (2.2.4) électronique.

5. Dispositif selon la revendication 4, **caractérisé en ce que** l'unité d'évaluation (2.2.4) présente un spectromètre, en particulier pour la détermination de la taille des particules.
